# EUROPÄISCHE PATENTANMELDUNG

(11) **EP 2 269 895 A2**
(43) Veröffentlichungstag der Anmeldung: **05.01.2011**
(21) Anmeldenummer: 10006785.9
(22) Anmeldetag: 01.07.2010
(51) Int. Cl.: B62D 21/20, B60B 35/10

(54) **Anhängerfahrzeug**

(30) Priorität: 01.07.2009 DE 102009031213
(71) Anmelder: Weber, Florian, 54518 Arenrath (DE)
(72) Erfinder: Weber, Florian, 54518 Arenrath (DE)
(74) Vertreter: Bernhardt, Reinold

(57) **Zusammenfassung**

Die Erfindung betrifft ein Anhängerfahrzeug mit einem Einrichtungen zur Nutzlostaufnahme tragenden Rahmenelement (1) und an dem Rahmenelement (1) über Fahrwerksteile (6,7) aufgehängten Rädern (3,4). Erfindungsgemäß ist die Aufhängungspositionen der Räder (3,4) am Rahmenelement (1) verstellbar.

## Beschreibung

Die Erfindung betrifft ein Anhängerfahrzeug mit einem Einrichtungen zur Nutzlastaufnahme tragenden Rahmenelement und an dem Rahmenelement über Fahrwerksteile aufgehängten Rädern.

Der Erfindung liegt die Aufgabe zugrunde, ein neues solches Anhängerfahrzeug zu schaffen, das sich besonders für gebirgiges Gelände eignet und insbesondere für landwirtschaftliche Zwecke nutzen lässt.

Das diese Aufgabe lösende Anhängerfahrzeug nach der Erfindung ist **dadurch gekennzeichnet, dass** die Aufhängungsposition der Räder am Rahmenelement verstellbar ist.

Vorteilhaft kann ein solches Anhängerfahrzeug sein Fahrwerk den Geländebedingungen anpassen und z.B. an Steilhängen unter Beibehaltung der Horizontallage des Rahmenelements, insbesondere quer zur Gradientenrichtung der Hangneigung, bewegt werden. Jegliche Kippgefahr ist beseitigt, Lasten lassen sich auch in schwierigem Gelände sicher transportieren.

Während eine Verstellung der Aufhängungspositionen der Räder unabhängig voneinander möglich wäre, sind in einer bevorzugten Ausführungsform der Erfindung zumindest die Aufhängungspositionen der Räder auf einer Seite des Rahmenelements unabhängig von den Aufhängungspositionen der Räder auf der gegenüberliegenden Seite des Rahmenelements verstellbar. So lässt sich in Fällen, in denen Fahrtrichtung und Gradientenrichtung der Hangneigung zueinander senkrecht stehen und Kippgefahr besteht, die Lage des Rahmenelements und damit der zur Nutzlastaufnahme auf dem Rahmenelement vorgesehenen Einrichtungen stabilisieren und die Kippgefahr beseitigen.

Während auch eine horizontale Verstellung der Radaufhöngeposition möglich wäre, ist in der bevorzugten Ausführungsform der Erfindung vor allem die Höhenposition der Räder verstellbar.

Die Räder können an dem Rahmenelement einzeln jeweils über einen um eine zur Fahrtrichtung senkrechte Achse drehbaren Schwenkhebel aufgehängt sein, wobei die Räder mit dem Schwenkhebel vorzugsweise über einen zur Schwenkachse parallelen Achsstummel verbunden sind. So lässt sich die Aufhängungsposition der Räder durch Änderung der Schwenkposition des Schwenkhebels verstellen.

In weiterer Ausgestaltung der Erfindung sind der Schwenkhebel eines vorderen Rades und der Schwenkhebels eines in Fahrtrichtung dahinter angeordnetes Rades um eine gemeinsame Achse verschwenkbar.

Die um die gemeinsame Achse verschwenkbaren Schwenkhebel lassen sich unter Bildung einer die Räder tragenden Wippe in ihrer Schwenkposition zueinander fixieren. Vorteilhaft sorgt die Wippe dafür, dass insbesondere ein Hindernis mit einer hohen, in Fahrtrichtung entgegenstehenden Kante problemlos überfahren werden kann.

In der bevorzugten Ausführungsform der Erfindung ist der Schwenkhebel jeweils als zweiarmiger Hebel mit einer über die Drehachse hinausreichenden Verlängerung ausgebildet, wobei die Hebelarme zueinander vorzugsweise im Winkel stehen.

Die um die gemeinsame Achse verschwenkbaren Schwenkhebel sind vorzugsweise in der Art einer Schere durch einen die gemeinsame Drehachse bildenden Achsbolzen miteinander verbunden.

Die Schwenkhebel können durch eine Verstelleinrichtung, vorzugsweise einen Hydraulikzylinder, gegeneinander verschwenkt werden, wobei die Verstelleinrichtung vorzugsweise an den den Rädern abgewandten Hebelarmen angreift. Zweckmäßig ist die Verstelleinrichtung über eine Federeinrichtung mit einem der Hebel verbunden, wobei es sich bei der Federeinrichtung zweckmäßig um eine Hydraulikfedereinrichtung mit einem angeschlossenen Druckbehälter handelt.

In weiterer vorteilhafter Ausgestaltung der Erfindung können vordere und hintere Räder in der Spur zueinander versetzt sein, wobei die Spur der Vorderräder z.B. vollständig innerhalb der Spur der Hinterräder liegen kann. Beanspruchungen des Bodens durch die Räder werden auf diese Weise gering gehalten, was insbesondere bei landwirtschaftlicher Nutzung des Anhängerfahrzeugs von Vorteil ist.

Der Versatz der Räder senkrecht zur Fahrtrichtung kann durch unterschiedlich lange, der Verbindung zwischen Rad und Schwenkhebel dienende Achsstummel bewirkt werden. Alternativ können die Hebelarme der Schwenkhebel senkrecht zur Fahrtrichtung zueinander versetzt angeordnet sein.

Es versteht sich, dass die Verstellung der Räder automatisch erfolgen kann, wobei z.B. die Neigungsposition des Rahmenelements sensorisch erfasst und eine gewünschte Lage des Rahmenelements durch die Verstellung der Räder eingeregelt wird.

Bei dem Rahmenelement handelt es sich vorzugsweise um einen einzigen, sich in seiner Länge in Fahrtrichtung erstreckenden Träger, der in der Mitte des Fahrzeugs angeordnet ist. Insbesondere weist der Träger ein Kastenprofil auf, dessen Längsseiten vorzugsweise horizontal ausgerichtet sind. So kann der Träger hohe, z.B. durch einen Ladeboden bzw. -kasten ausgeübte Torsionskräfte aufnehmen.

In weiterer Ausgestaltung der Erfindung ist eine Steuereinrichtung zur automatischen Verstellung der Aufhängungsposition der Räder unter Einregelung der Lage des Rahmenelements vorgesehen.

Ferner können Einrichtungen zur Variation der Spurweite, insbesondere der Spurweite der hinteren Räder, gebildet sein.

In einer weiteren Ausführungsform der Erfindung ist einer der Schwenkhebel, insbesondere der Schwenkhebel für die Hinterräder, zweiteilig mit zwei Hebelarmabschnitten und einem zwischen den Hebelarmabschnitten angeordneten Gelenk ausgebildet und ein zweiter Hebelarm dieses Schwenkhebels ist bei der Radachse angeordnet.

Zweckmäßig ist der Schwenkhebel des Vorderrades zweiteilig mit einem Gelenk ausgebildet und ein zweiter Hebelarm bei der Achse des Vorderrads angeordnet.

In weiterer Ausgestaltung der Erfindung ist eine den Hydraulikdruck erfassende Einrichtung zur Bestimmung des Zuladungsgewichts vorgesehen.

Die Erfindung wird nachfolgend anhand von Ausführungsbeispielen und der beiliegenden, sich auf diese Ausführungsbeispiele beziehenden Zeichnungen weiter erläutert. Es zeigen:
- Fig. 1: ein erstes Ausführungsbeispiel für ein Anhängerfahrzeug nach der Erfindung in perspektivischer Ansicht,
- Fig. 2: das Anhängerfahrzeug von Fig. 1 in einer Ansicht von hinten,
- Fig. 3: das Anhängerfahrzeug von Fig. 1 in einer Seitenansicht,
- Fig. 4: das Anhängerfahrzeug von Fig. 1 in einer Draufsicht, und
- Fig. 5 bis 20: vier weitere Ausführungsbeispiele für ein Anhängerfahrzeug nach der Erfindung in den Ansichten gemäß Fig. 1 bis 4.

Ein an ein Schleppfahrzeug, vorzugsweise einen Traktor, anhängbares Anhängerfahrzeug weist als Rahmenelement einen einzigen, in der Fahrzeugmitte angeordneten Träger 1 auf. Der hohle Träger 1 ist durch ein Kastenprofil gebildet, dessen längere Profilseiten sich horizontal erstrecken. Am vorderen Ende geht der Träger 1 in einen schmaleren Schleppstangenabschnitt 2 mit etwa quadratischem Querschnitt über.

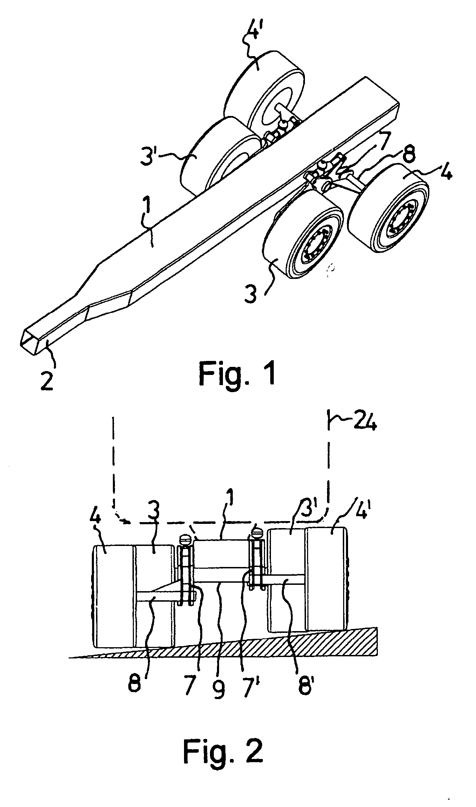

Auf dem Träger 1 kann z.B. ein Ladung aufnehmender Kasten 24 angebracht sein, wie dies in Fig. 2 durch Strichlinien angedeutet ist.

Auf jeder der beiden Längsseiten des Trägers 1 sind zwei Räder 3,4 bzw. 3',4' angebracht, die senkrecht zur Fahrtrichtung zueinander soweit versetzt sind, dass die Spur der vorderen Räder 3,3' nahezu vollständig innerhalb der Spur der hinteren Räder 4,4' liegt.

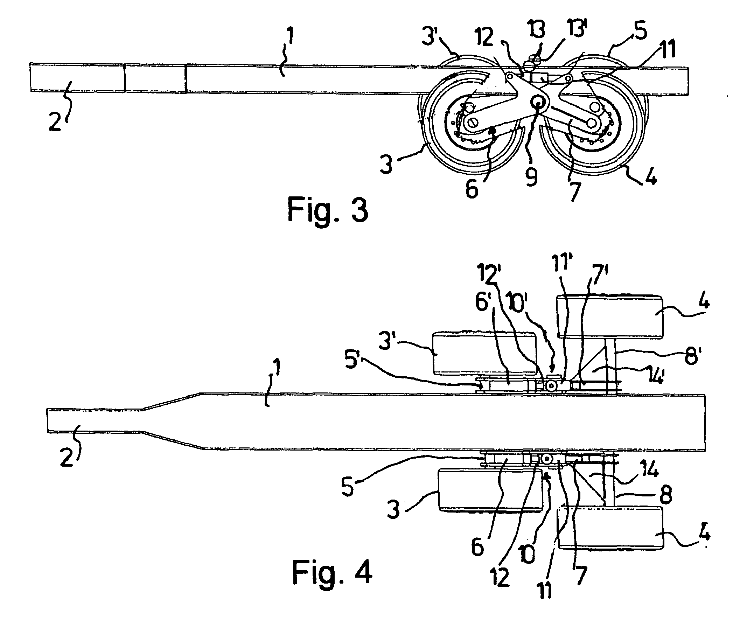

Die vorderen Räder 3,3' sind jeweils einzeln über einen Achsstummel 5 bzw. 5' an einem Schwenkhebel 6 bzw. 6' gelagert. Die hinteren Räder 4,4' hängen ebenso einzeln an einem Schwenkhebel 7 bzw. 7'. Zur Lagerung der hinteren Räder 4,4' verwendete Achsstummel 8,8' sind entsprechend der größeren Spurbreite der hinteren Räder 4,4' gegenüber den Achsstummeln 5,5' verlängert. Wie Fig. 4 zeigt, sind die Achsstummel 8,8' mit dem betreffenden Schwenkhebel zusätzlich über eine dreieckige Verstärkungsplatte 14 bzw. 14' verbunden.

Die Schwenkhebel 6,7 bzw. 6',7' sind jeweils zweiarmig mit zueinander im Winkel stehenden Hebelarmen ausgebildet. Die Hebel lassen sich um eine gemeinsame Drehachse verschwenken, wobei diese Drehachse durch einen Achsbolzen 9 gebildet ist, der die Schwenkhebel 6,7 bzw. 6',7' in der Art einer Schere verbindet und sich quer über den Träger 1 von dessen einer zur anderen Seite erstreckt. An seiner Unterseite ist der Träger 1 mit dem Achsbolzen 9 verbunden. Der Achsbolzen könnte auch durch den Träger hindurch geführt sein.

Wie insbesondere Fig. 4 erkennen lässt, bestehen die Schwenkhebel 6,7 bzw. 6',7' jeweils aus zwei zueinander parallel und im Abstand angeordneten, miteinander verbundenen Blättern, wobei die Schwenkhebel 7,7' jeweils zwischen den beiden Blättern der Schwenkhebel 6,6' verschachtelt angeordnet sind.

An die Enden der den Rädern fernen Hebelarme der Schwenkhebel 6,7 bzw. 6',7' ist jeweils eine Zylinder-Feder-Baugruppe 10 bzw. 10' angelenkt. Die Baugruppen 10,10' umfassen jeweils einen Hydraulikzylinder 11 bzw. 11', dessen Kolbenstange am Schwenkhebel 7 bzw. 7' angreift. An seiner der Kolbenstange abgewandten Seite liegt der Hydraulikzylinder 11 bzw. 11' gegen das Ende eines Federzylinders 12 bzw. 12' an, dessen Kolbenstange mit dem Schwenkhebel 6 bzw. 6' verbunden ist. An den Federzylindern 12,12' ist jeweils ein Druckbehälter 13 bzw. 13' angebracht.

Im Fahrbetrieb lassen sich die Räder 3,4 bzw. 3',4' durch Betätigung des Hydraulikzylinders 11 bzw. 11' verstellen. Die Hydraulikzylinder 11,11' lassen sich z.B. an eine zur Ausstattung des Schleppfahrzeugs gehörende Hydraulikpumpe anschließen. Wie Fig. 2 zeigt, kann die Aufhängungsposition der Räder den Geländebedingungen derart angepasst werden, dass der Träger 1 seine horizontale Lage beibehält. Erhöhter Hydraulikdruck im Hydraulikzylinder 11 bzw. 11' sorgt für eine Aufspreizung der den Rädern fernern Hebelarme der Schwenkhebel 6,7 bzw. 6',7' und damit für eine entsprechende Änderung der Aufhängungsposition der Räder 3,4 bzw. 3',4'. Bei Verminderung des Hydraulikdrucks sorgt das Gewicht des Trägers 1 und einer gehaltenen Last für eine Aufspreizung der den Rädern zugewandten Hebelarme der Schwenkhebel 6,7 bzw. 6',7' und damit für eine Absenkung des Trägers 1 in Bezug auf die betreffenden Räder.

Es versteht sich, dass die Verstellung der Räder automatisch erfolgen kann, z.B. gesteuert durch einen die Neigung des Trägers 1 erfassenden Sensor.

Soweit keine Verstellung der Räder erfolgt, wird die Hydraulikölmenge im Hydraulikzylinder 12 bzw. 12' konstant gehalten. Die Schwenkstellung der Schwenkhebel 6,7 bzw. 6',7' liegt damit fest und diese Hebel bilden jeweils eine Wippe, die es ermöglicht, steile Hindernisse zu überfahren.

Die Federzylinder 12,12' sorgen im Zusammenspiel mit den Druckbehältern 13,13' für eine Abfederung der Räder 3,4 bzw. 3',4'.

In den nachfolgenden Figuren sind gleiche oder gleichwirkende Teile mit derselben Bezugszahl wie in den vorangehenden Figuren bezeichnet, wobei der betreffenden Bezugszahl der Buchstabe a, b, c bzw. d beigefügt ist.

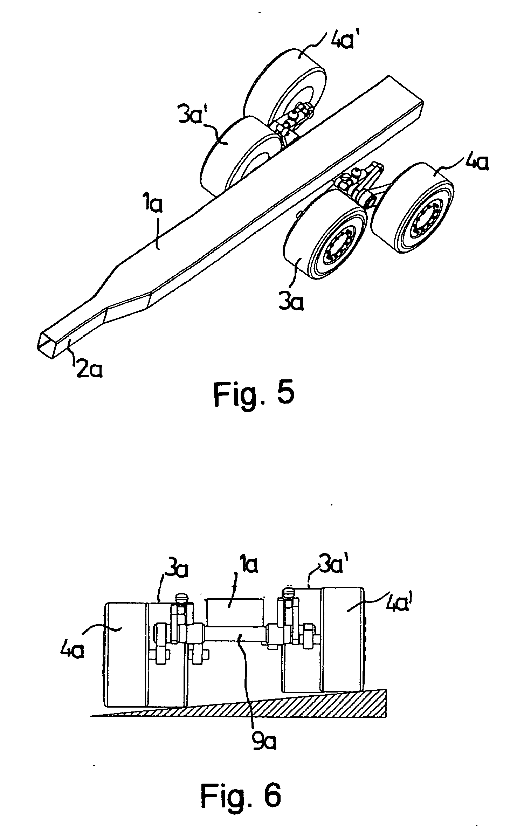

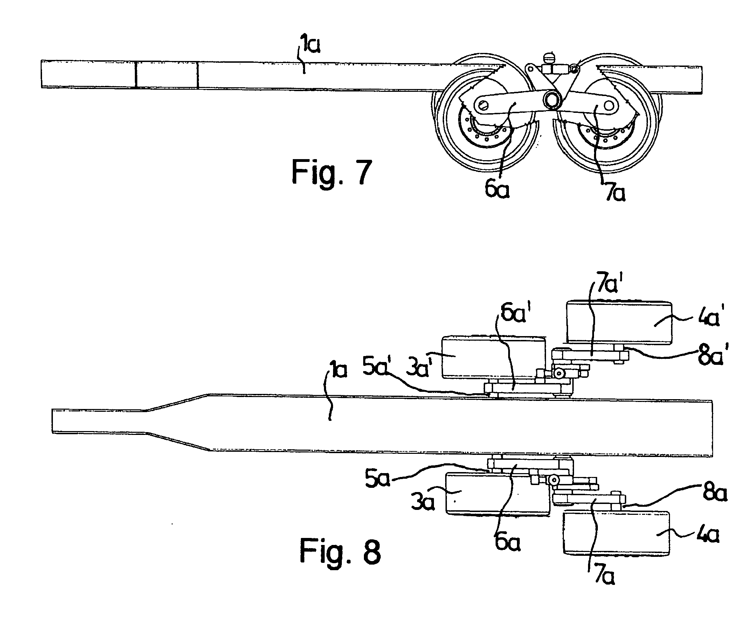

Das in den Figuren 5 bis 8 gezeigte Ausführungsbeispiel für ein Anhängerfahrzeug unterscheidet sich von dem vorangehenden Ausführungsbeispiel dadurch, dass Schwenkhebel 6a und 7a bzw. 6a' und 7a' keine in einer einzigen Ebene liegenden Hebelarme aufweisen, sondern wie insbesondere Fig. 8 erkennen lässt, deren Hebelarme seitlich zueinander versetzt angeordnet sind. Entsprechend brauchen die zur Lagerung für hintere Räder 4a,4a' mit breiterer Spur verwendeten Achsstummel 9a,9a' nicht länger als die zur Lagerung der vorderen Räder 3a,3a' mit schmalerer Spur verwendeten Achsstummel 5a,5a' zu sein.

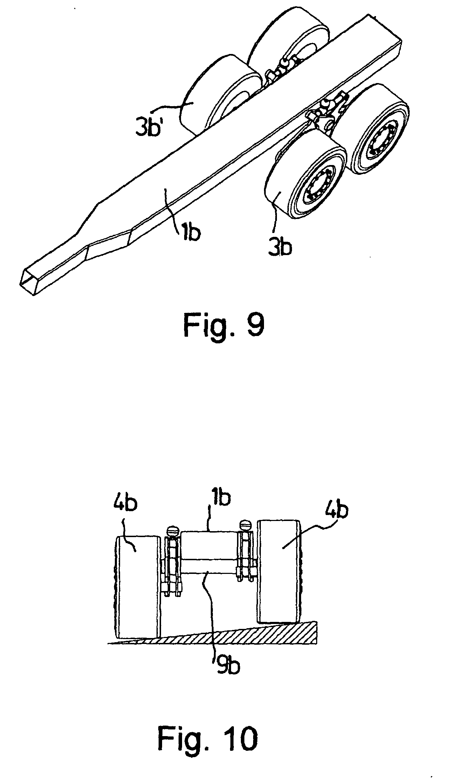

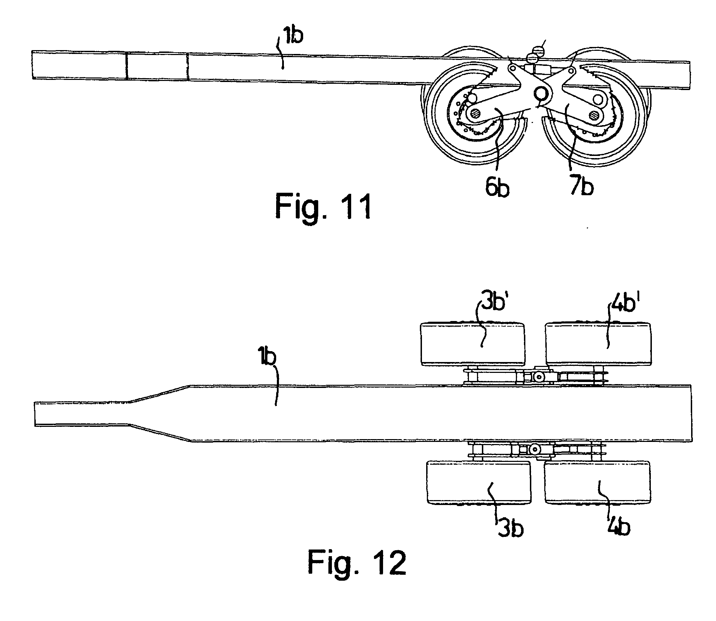

Das in den Figuren 9 bis 12 dargestellte Ausführungsbeispiel eines Anhängerfahrzeugs unterscheidet sich von dem Ausführungsbeispiel gemäß den Figuren 1 bis 4 nur darin, dass die vorderen Räder 3b,3b' nicht seitlich versetzt zu den hinteren Rädern 4b,4b' angeordnet sind.

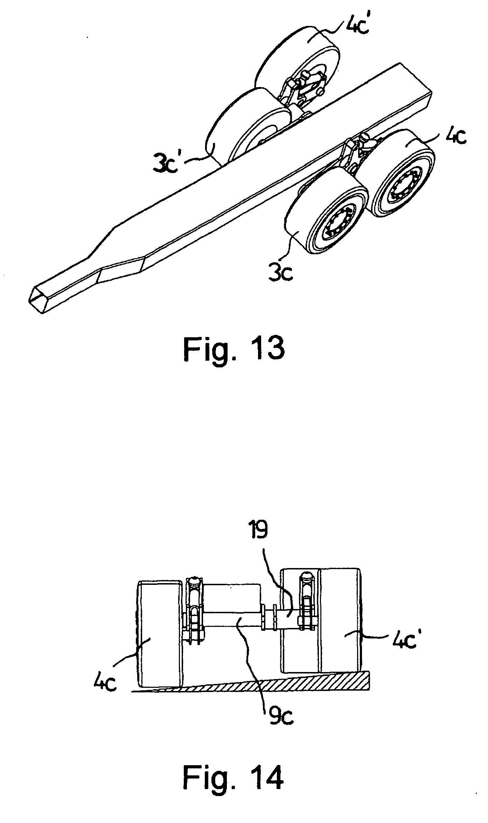

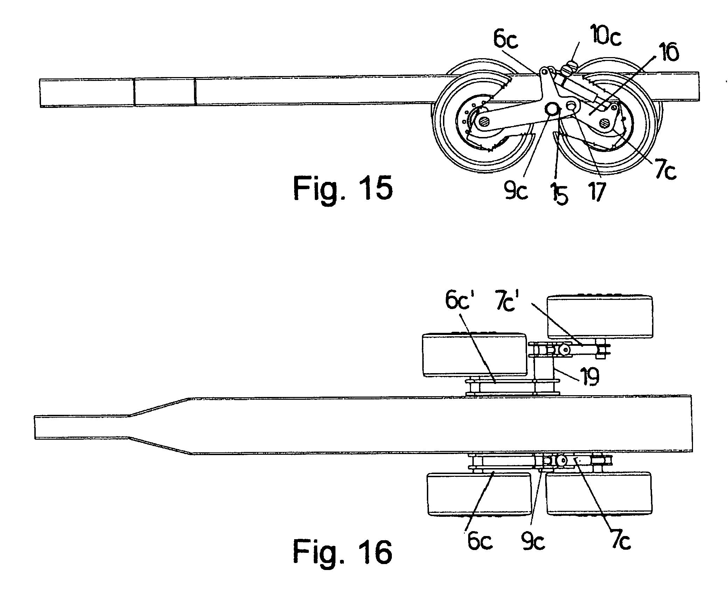

Ein in den Figuren 13 bis 16 dargestelltes Ausführungsbeispiel weist Schwenkhebel 6c,7c und 6c',7c' auf, von denen die Schwenkhebel 7c,7c' einen zweigliedrigen Hebelarm mit Hebelarmabschnitten 15 und 16 sowie einem zwischen den Hebelarmabschnitten angeordneten Gelenk 17 umfassen. Ein zweiter Hebelarm der Schwenkhebel 7c,7c' ist nicht wie bei den vorangehenden Ausführungsbeispielen bei dem Achsbolzen 9c sondern der Radachse der Hinterräder 4c,4c' angeordnet und an diesen Hebelarm ist die Zylinder-Feder-Baugnippe 10c angelenkt. Sowohl die Höhenverstellung der Räder als auch die Federung erfolgt dadurch, dass die Hebelarmabschnitte 15,16 ihre Winkelstellung zueinander verändern.

Die Spurbreite der Hinterräder 4c,4c' lässt sich wahlweise durch einen Achsbolzenansatz 19 verbreitern, der den Schwenkhebel 7c bzw. 7c' umfasst und an dem ferner der zweite Hebelarm des Schwenkhebels 6c bzw. 6c' angebracht ist.

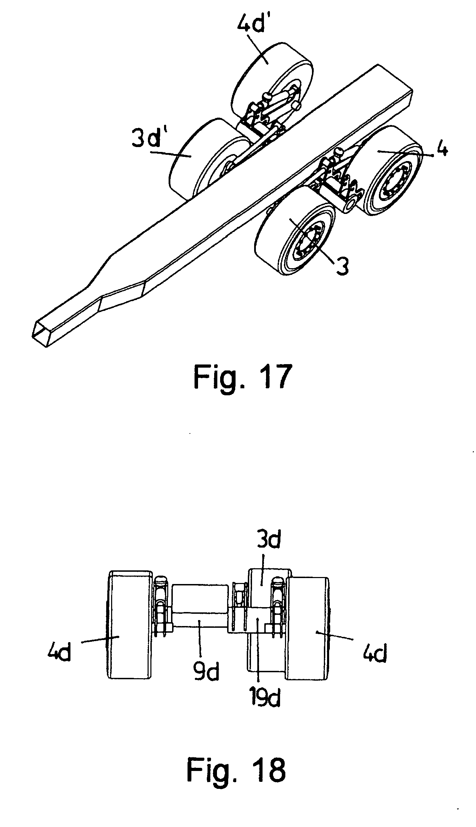

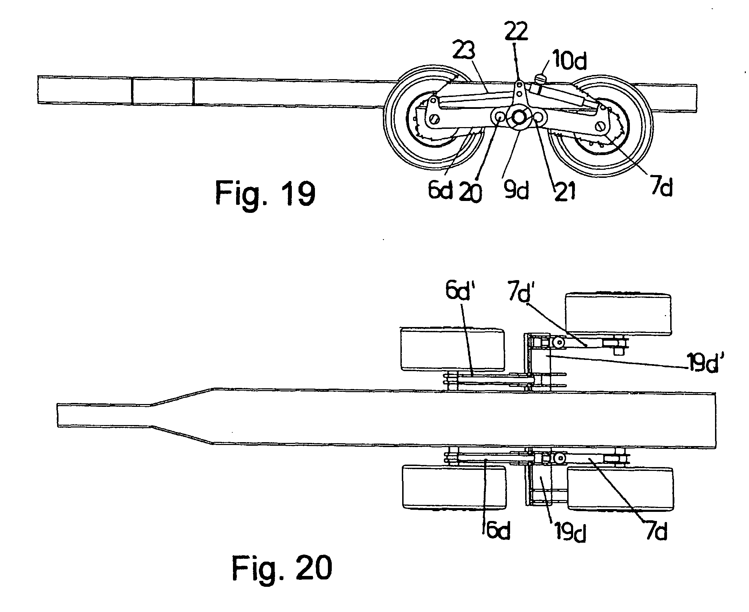

Die Figuren 17 bis 20 zeigen ein Ausführungsbeispiel, das ebenfalls eine Spurverbreiterung zulässt, in dem die Enden des Achsbolzens 9d jeweils zweifach in axialem Abstand zueinander mit Hebelarmabschnitten zur Bildung der Schwenkhebel 7d,7d' bestückt sind. Sowohl die Schwenkhebel 7d,7d' als auch vordere Schwenkhebel 6d,6d' sind zweiteilig mit einem Gelenk 21 bzw. 20 ausgebildet. Die Zylinder-Feder-Baugruppe 10d greift an einem Hebelarm der Schwenkhebel 7d,7d' sowie einem mit dem Achsbolzen 9d verbundenen Hebel 22 an.

Zwischen dem Hebel 22 und einem Hebelarm des Schwenkhebels 6d bzw. 6d' ist ein in seiner Länge verstellbarer Stab 23 angelenkt. Der Stab 23 kann zur Voreinstellung dienen. Nach Einstellung der Länge des Stabs ist das Gelenk 20 durch den Stab arretiert.

Sowohl bei dem Ausführungsbeispiel von Fig. 13 bis 16 als auch bei dem Ausführungsbeispiel von Fig. 17 bis 20 ergibt sich beim Bremsen eine ausgeglichene Lastverteilung der Räder auf den Boden, indem durch den zurückversetzten Drehpunkt um das Gelenk 17 bzw. 21 eine Wippe mit einem längeren vorderen Hebelarm gebildet ist.

Durch Messung des zur Aufrechterhaltung einer bestimmten Aufhängungshöhe der Räder erforderlichen Hydraulikdrucks lässt sich das Gewicht der Zuladung ermitteln.

## Patentansprüche

1. Anhängerfahrzeug mit einem Einrichtungen zur Nutzlastaufnahme tragenden Rahmenelement (1) und an dem Rahmenelement (1) über Fahrwerksteile (6,7) aufgehängten Rädern (3,4),
**dadurch gekennzeichnet,**
**dass** die Aufhängungsposition der Räder (3,4) an dem Rahmenelement (1) verstellbar ist.

2. Anhängerfahrzeug nach Anspruch 1,
**dadurch gekennzeichnet,**
**dass** die Aufhängungspositionen aller Räder unabhängig voneinander verstellbar ist oder wenigstens die Aufhängungsposition der Räder (3,4) auf einer Seite des Rahmenelements (1) unabhängig von der Aufhängungsposition der Räder (3',4') auf der gegenüberliegenden Seite des Rahmenelements (1) verstellbar sind.

3. Anhängerfahrzeug nach Anspruch 1 oder 2,
**dadurch gekennzeichnet,**
**dass** die Höhenposition der Räder (3,4) verstellbar ist.

4. Anhängerfahrzeug nach einem der Ansprüche 1 bis 3,
**dadurch gekennzeichnet,**
**dass** die Räder (3,4) an dem Rahmenelement (1) einzeln jeweils über einen Schwenkhebel (6,7), wobei der Schwenkhebel um eine zur Fahrtrichtung senkrechte Achse verschwenkbar ist, aufgehängt sind.

5. Anhängerfahrzeug nach Anspruch 4,
**dadurch gekennzeichnet,**
**dass** die Räder (3,4) mit dem Schwenkhebel (6,7) über einen zur Schwenkachse parallelen Achsstummel (5) verbunden sind.

6. Anhängerfahrzeug nach Anspruch 4 oder 5,
**dadurch gekennzeichnet,**
**dass** die Aufhängungspositionen der Räder (3,4) durch Änderung der Schwenkstellung der Schwenkhebel (6,7) verstellbar sind.

7. Anhängerfahrzeug nach einem der Ansprüche 4 bis 6,
**dadurch gekennzeichnet,**
**dass** der Schwenkhebel (6) eines vorderen Rades (3) und der Schwenkhebel (7) eines in Fahrtrichtung dahinterliegenden Rades (4) um eine gemeinsame Achse (9) verschwenkbar sind.

8. Anhängerfahrzeug nach Anspruch 7,
**dadurch gekennzeichnet,**
**dass** die um die gemeinsame Achse (9) verschwenkbaren Schwenkhebel (6,7) unter Bildung einer Wippe in ihrer Schwenkposition zueinander fixierbar sind.

9. Anhängerfahrzeug nach einem der Ansprüche 4 bis 8,
**dadurch gekennzeichnet,**
**dass** der Schwenkhebel (6,7) jeweils als zweiarmiger Hebel mit einer über die Drehachse hinausreichenden, einen der Hebelarme (16,17) bildenden Verlängerung ausgebildet ist.

10. Anhängerfahrzeug nach Anspruch 9,
**dadurch gekennzeichnet,**
**dass** die Hebelarme (16,17) der Schwenkhebel (6,7) jeweils zueinander im Winkel stehen.

11. Anhängerfahrzeug nach einem der Ansprüche 7 bis 10,
**dadurch gekennzeichnet,**
**dass** die um die gemeinsame Achse (9) verschwenkbaren Schwenkhebel (6,7) in der Art einer Schere durch einen die gemeinsame Schwenkachse bildenden Achsbolzen (9) miteinander verbunden sind.

12. Anhängerfahrzeug nach Anspruch 11,
**dadurch gekennzeichnet,**
**dass** die in der Art einer Schere miteinander verbundenen Schwenkhebel (6,7) in einer Ebene liegen oder senkrecht zur Fahrtrichtung zueinander versetzt angeordnet sind.

13. Anhängerfahrzeug nach einem der Ansprüche 9 bis 12,
**dadurch gekennzeichnet,**
**dass** die den Rädern (3,4) abgewandten Hebelarme (17) der Schwenkhebel (6,7) durch eine Verstelleinrichtung, vorzugsweise einen Hydraulikzylinder (11), zur Verstellung der Aufhängungsposition der Räder (3,4) aufspreizbar sind.

14. Anhängerfahrzeug nach Anspruch 13,
**dadurch gekennzeichnet,**
**dass** die Verstelleinrichtung (11) über eine Federeinrichtung (12) mit einem der Schwenkhebel (6) verbunden ist.

15. Anhängerfahrzeug nach einem der Ansprüche 1 bis 14,
**dadurch gekennzeichnet,**
**dass** in Fahrtrichtung hintereinander liegende Räder senkrecht zur Fahrtrichtung zueinander versetzt sind.
